# EUROPÄISCHE PATENTANMELDUNG

(11) **EP 0 679 667 A1**
(43) Veröffentlichungstag der Anmeldung: **02.11.1995**
(21) Anmeldenummer: 95106086.2
(22) Anmeldetag: 24.04.1995
(51) Int. Cl.: C08G 16/02, C09D 11/08, C09D 11/10

(54) **Modifizierte Resinate**

(30) Priorität: 29.04.1994 DE 4415084
(71) Anmelder: HOECHST AKTIENGESELLSCHAFT, D-65926 Frankfurt am Main (DE)
(72) Erfinder: Bender, Albert, Dr., D-55130 Mainz (DE)

(57) **Zusammenfassung**

Modifizierte Resinate, die sich als Bindemittelharze für den Illustrationstiefdruck eignen, können hergestellt werden durch Umsetzung von
A) Naturharzen oder Naturharzsäuren mit
B) Aldehydkomponenten und gegebenenfalls
C) α,β-olefinisch ungesättigten Carbonsäuren oder deren Anhydriden,
   anschließende Reaktion der gebildeten Anlagerungsprodukte mit
D) Phenolen und gegebenenfalls
E) Alkoholen mit mindestens zwei Hydroxylgruppen
   und anschließende Resinatbildung mit
F) basischen Verbindungen zweiwertiger Metalle.

## Beschreibung

Die Erfindung betrifft modifizierte Resinate mit hoher Viskosität in Lösung, die die vorteilhafte Formulierung festkörperarmer Druckfarben für den Illustrationstiefdruck gestatten.

Die Magnesium-, Calcium- oder Zinksalze von Naturharzsäuren, die auch modifiziert sein können, werden als Resinate bezeichnet. Resinate werden in toluolischer Lösung als Bindemittelharze für den Illustrationstiefdruck eingesetzt. Sie besitzen ein sehr gutes Benetzungsverhalten insbesondere gegenüber Gelbpigmenten vom Diazotyp. Solche Resinate sind beispielsweise aus der DE-C 27 55 825 bekannt, die Calciumresinate von Umsetzungsprodukten des Formaldehyds mit Naturharzsäuren beschreibt. Diese Produkte sind allerdings niedermolekular und besitzen somit in toluolischer Lösung eine relativ niedrige Viskosität. Um gute drucktechnische Ergebnisse bei der in der Praxis verwendeten Druckviskosität zu erhalten, müssen mit den beschriebenen Resinaten formulierte Farben relativ harzreich aufgebaut werden, so daß ihre Herstellung hohe Kosten verursacht.

Es ist des weiteren bekannt, daß die im Stand der Technik beschriebenen Resinate mit Rotpigmenten vom Typ ®Litholrubin in Toluol zu Farben mit mangelnden Eigenschaften führen, die trotz ihres hohen Harzgehalts eine ungenügende Lagerstabilität aufweisen.

Der vorliegenden Erfindung lag somit die Aufgabe zugrunde, neue Resinate verfügbar zu machen, die die Formulierung harzarmer Farben mit hohem Glanz, rascher Trocknung und guter Verdruckbarkeit für den Tiefdruck mit Toluol gestatten und die sowohl in Gelb- wie auch Rotfarben vorteilhaft einsetzbar sind.

Diese Aufgabe konnte in unerwarteter Weise dadurch gelöst werden, daß man zunächst an Naturharzsäuren Aldehyde anlagert, und die erhaltenen Zwischenprodukte zuerst mit Phenolen und dann mit basischen Verbindungen zweiwertiger Metalle kondensiert. Gegebenenfalls können auch α,β-olefinisch ungesättigte Carbonsäuren oder deren Anhydride sowie Alkohole in untergeordneten Mengen zur Modifizierung mitverwendet werden.

Gegenstand der vorliegenden Erfindung sind also modifizierte Resinate, herstellbar durch Umsetzung von
A) Naturharzen oder Naturharzsäuren mit
B) Aldehydkomponenten und gegebenenfalls
C) α,β-olefinisch ungesättigten Carbonsäuren oder deren Anhydriden,
   anschließende Reaktion der gebildeten Anlagerungsprodukte mit
D) Phenolen und gegebenenfalls
E) Alkoholen mit mindestens zwei Hydroxylgruppen
   und anschließende Resinatbildung mit
F) basischen Verbindungen zweiwertiger Metalle.

Als Komponente A) werden Naturharze oder Naturharzsäuren, vorzugsweise Kolophonium, Wurzelharz, Tallharz sowie disproportioniertes oder partiell hydriertes oder dimerisiertes Naturharz beliebiger Provenienz verwendet.

Unter Aldehydkomponenten B), die als freie Aldehyde oder auch als Acetale vorliegen können, sind vorzugsweise aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal zu verstehen.

Geeignete α,β-olefinisch ungesättigte Verbindungen C) sind vorzugsweise Fumarsäure, Maleinsäure, Itakonsäure, Zimtsäure, Acrylsäure, Methacrylsäure, insbesondere Maleinsäureanhydrid.

Als Phenole D) kommen vorzugsweise solche in Betracht, die gegenüber Oxoverbindungen mehrfach-funktionell sind, insbesondere Phenol, insbesondere (C₁-C₁₂)-Alkylphenole, weiterhin Aryl- oder Aralkylphenole, wie Kresole, 1,3,5-Xylenole, Isopropyl-, p-tert.-Butyl-, Amyl-, Oktylphenol, Diphenylolpropan, Phenylphenol, Cumylphenol, insbesondere Nonylphenol, sowie Additionsprodukte aus Phenolen und ethylenisch ungesättigten Monomeren, beispielsweise α-Methyl-Styrol, α-Chlor-Styrol, Vinyltoluol, Cyclopentadien.

Unter Alkoholen E) sind solche zu verstehen, die mindestens zwei Hydroxylgruppen besitzen, also beispielsweise Glykole wie Ethylenglykol, ferner Trimethylolethan, Trimethylolpropan, Glycerin oder Pentaerythrit.

Als basische Verbindungen zweiwertiger Metalle F) sind Verbindungen des Magnesiums, Zinks und insbesondere Calciums bevorzugt. Die Metallverbindungen können jeweils für sich alleine oder im Gemisch eingesetzt werden. Vorzugsweise werden die Oxide und Hydroxide sowie die Salze schwacher Säuren, also beispielsweise die Carbonate, Hydrogencarbonate, Acetate, Oxalate, eingesetzt.

Gegenstand der vorliegenden Erfindung ist auch ein Verfahren zur Herstellung modifizierter Resinate.

Bei Herstellung der erfindungsgemäßen Resinate beträgt der Anteil der einzelnen Komponenten, bezogen auf die Gesamtmenge aller reaktiven Komponenten,
50 bis 95 Gew.-%, vorzugsweise 60 bis 90 Gew.-%, Naturharze oder Naturharzsäuren aus der Substanzgruppe A),
1 bis 20 Gew.-%, vorzugsweise 3 bis 10 Gew.-%, insbesondere 5 bis 8 Gew.-%, Aldehydkomponenten aus der Substanzgruppe B),
0 bis 5 Gew.-% α,β-olefinisch ungesättigte Carbonsäuren oder deren Anhydride aus der Substanzgruppe C),
1 bis 30 Gew.-%, vorzugsweise 5 bis 20 Gew.-%, phenolische Komponenten aus der Substanzgruppe D),
0 bis 10 Gew.-% Alkohole mit mindestens zwei Hydroxylgruppen aus der Substanzgruppe E)
0,1 bis 15 Gew.-%, vorzugsweise 4 bis 8 Gew.-%, basische Verbindungen zweiwertiger Metalle aus der Substanzgruppe F),
Im ersten Reaktionsschritt werden dazu Naturharze oder Naturharzsäuren A) eingesetzt. Die Verbindungen A) können während des ersten Reaktionsschrittes oder teilweise vorab durch Umsetzung mit α,β-olefinisch ungesättigten Carbonsäuren oder deren Anhydriden C) modifiziert werden. Die separate Modifizierung von Naturharzen A), mit α,β-olefinisch ungesättigten Carbonsäuren C) ist bekannt. Bevorzugt werden dazu die Verbindungen A) und C) bei 140 bis 160 °C in der Schmelze der Reaktanden umgesetzt.

Die Umsetzung von A) und B) sowie ggf. C) erfolgt bei erhöhter Temperatur von vorzugsweise 80 bis 200 °C, insbesondere 100 bis 160 °C, bei einem Druck von vorzugsweise 1 bis 10 , insbesondere 2 bis 6 bar.

Die zweite Reaktionsstufe wird so durchgeführt, daß die in der ersten Reaktionsstufe gebildeten Anlagerungsprodukte aus A) und B) sowie gegebenenfalls C) mit den Phenolen D) vorzugsweise in Substanz und unter Normaldruck auf eine Temperatur von vorzugsweise 200 bis 300 °C, insbesondere 220 bis 260 °C erhitzt werden, so daß die Kondensationsreaktion unter Wasserabspaltung erfolgen kann.

Sollen Alkohole E) als Veresterungsmittel mitverwendet werden, so können diese gleichzeitig mit den Phenolen D) dem Ansatz zugefügt werden.

In der dritten Reaktionsstufe erfolgt die Umsetzung mit der zweiwertigen Metallverbindung F) zum eigentlichen Resinat. Dazu wird das aus den Komponenten A), B), D) und gegebenenfalls C) und E) gebildete Vorprodukt vorzugsweise bei einer Temperatur zwischen 160 und 300°C, insbesondere 200 bis 260 °C, mit basischen Verbindungen zweiwertiger Metalle F) unter Resinatbildung und Abdestillation des Reaktionswassers umgesetzt. Anschließend wird die Schmelze entweder mit Toluol verdünnt und das Resinat direkt als toluolische Lösung erhalten oder das Reaktionsgemisch auf Raumtemperatur abgekühlt und das Resinat als festes Harz gewonnen.

Eine besonders bevorzugte Ausführungsform besteht darin, die Salze schwacher Säuren der zweiwertigen Metalle erst während der Reaktion in situ aus den Oxiden oder Hydroxiden dieser Metalle durch Reaktion mit den entsprechenden schwachen Säuren herzustellen. Beispielsweise kann das gut mit Naturharzsäuren reagierende Calciumacetat durch Reaktion des Hydroxids mit Essigsäure in der Reaktionsschmelze hergestellt werden.

Die Herstellung der erfindungsgemäßen Produkte nach den vorstehend beschriebenen Verfahrensstufen ist ohne Schwierigkeiten durchführbar. Sie erfolgt in einem Reaktor, beispielsweise in einem üblichen Kessel oder Glaskolben, der mit Rührer, Heizung, Thermostatisierung, Zulaufvorrichtung, Rückflußkühler und Destillationsvorrichtung ausgestattet ist. Beispielsweise werden Naturharz A) oder eine Mischung aus Naturharzen, die teilweise mit α,β-ungesättigten Carbonsäuren oder deren Anhydriden C) umgesetzt worden sind, zusammen mit Aldehyd B) vorgelegt und bei einer Temperatur von 140 °C umgesetzt, so daß sich im geschlossenen Gefäß ein Druck von ca. 3 bar aufbaut. Diese Anlagerungsreaktion ist gewöhnlich nach drei Stunden beendet. Sodann wird drucklos gestellt, das entsprechende Phenol D) und gegebenenfalls der Alkohol E) zugegeben und auf hohe Reaktionstemperaturen von ca. 250 °C erwärmt, so daß entstehendes Reaktionswasser abzudestillieren beginnt. Bei dieser Temperatur wird dann die Metallverbindung F), vorzugsweise eine Calciumverbindung, zugegeben, die zweckmäßigerweise in suspendierter Form vorliegt, beispielsweise in einem inerten Lösungsmittel wie Xylol. Soll als Metallverbindung F) das Acetat verwendet werden, so ist es möglich, dieses während der Umsetzung aus dem Oxid oder Hydroxid durch Zugabe der notwendigen Essigsäuremenge herzustellen. Nach ca. 4 bis 6 Stunden ist die Resinatbildung abgeschlossen, erkennbar an der Beendigung der Wasserabspaltung. Restliche flüchtige Anteile der Harzschmelze können im Vakuum entfernt werden.

Bevor die Reaktion beendet wird, kann die Vollständigkeit der Umsetzung durch Viskositätsbestimmungen kontrolliert werden, beispielsweise wenn es erforderlich ist, zur Produktsteuerung einen vorgegebenen Wertebereich einzustellen. Dazu werden die erfindungsgemäßen Harze beispielsweise 25 Gew.-%ig in Toluol gelöst und die Viskosität der Lösungen mit einem üblichen Rotationsviskosimeter nach DIN 53214 oder mit dem Kapillar-Viskosimeter nach DIN 53177 bestimmt.

Das Harz fällt zunächst als Schmelze an, die dann mittels der üblichen Methoden während des Abkühlens zu groben Stücken, Pastillen oder Schuppen verarbeitet werden kann. Es ist natürlich auch möglich, das Resinat durch Zugabe von Toluol zur Schmelze direkt in eine gelöste Form zu überführen.

Die Harzlösungen weisen bei 23 °C, 25 Gew.-%ig in Toluol, eine Viskosität von vorzugsweise 2 bis 100 mPa·s, insbesondere 4 bis 50 mPa·s auf, jedoch kann dieser Bereich auch über- oder unterschritten werden. Zur weiteren Charakterisierung kann auch der Schmelzbereich herangezogen werden. Die erfindungsgemäßen Harze schmelzen erwünschterweise sehr hoch, vorzugsweise im Bereich von 150 bis 180 °C, gemessen nach DIN 53181 und 53736. Die Produkte weisen eine Säurezahl auf, die vorzugsweise unterhalb von 60 mg KOH/g Harz nach DIN 53402 liegt.

Die erfindungsgemäßen Resinate zeigen im Vergleich zu den Resinaten des Standes der Technik überlegene Eigenschaften.

Die erfindungsgemäße Mitverwendung von Phenolen D) erweist sich als außerordentlich günstig für die Resinatbildung der dritten Stufe. So können sehr hohe Umsetzungsgrade der Carboxylgruppen mit den Metallverbindungen erreicht werden, ohne daß durch unerwünschtes Auskristallisieren die Harzeigenschaften gemindert werden oder die Harze sogar vollkommen unbrauchbar werden. Bekanntlich sind hohe Umsetzungsgrade sehr wichtig für gute Pigmentbenetzungseigenschaften und für eine gute Trocknung der Tiefdruckfarbe.

Darüber hinaus zeigen insbesondere unter Einsatz von Nonylphenol hergestellte Produkte überraschenderweise eine erniedrigte Schmelzviskosität, die bei der Herstellung im technischen Maßstab von außerordentlichem Vorteil ist.

Es werden keine erfindungsgemäßen Produkte erhalten, wenn die Komponenten (A), (B) und (D) in bekannter Weise in Gegenwart von sauren oder basischen Katalysatoren gleichzeitig miteinander umgesetzt werden und dann die Resinatbildung durchgeführt wird, da Produkte mit ungeeigneten Eigenschaften entstehen (Vergleichsbeispiel 3).

Weiterer Gegenstand der Erfindung ist die Verwendung der erfindungsgemäßen Harze in Druckfarben, vorzugsweise als Bindemittel in Druckfarben für den Illustrationstiefdruck. Die neuen Resinate gestatten die Formulierung harzarmer Farben, vorzugsweise Gelbfarben, insbesondere aber auch Rotfarben. Sie ergeben trotz des niedrigen Harzgehaltes rasch trocknende Farben mit hohem Glanz und hoher Farbdichte, die ein überraschend schwach ausgeprägtes Durchschlageverhalten auch auf Naturpapier zeigen. Ein weiterer Vorteil ist die ausgezeichnete Lagerstabilität der unter Einsatz der erfindungsgemäßen Resinate hergestellten gelben und roten Farben.

Die Erfindung wird durch die nachfolgenden Beispiele näher erläutert. Die in den Beispielen angegebenen Teile und Prozente beziehen sich auf das Gewicht, soweit nicht anders vermerkt.

### Vergleichsbeispiel 1

Herstellung eines Festresinats niederer Lösungsviskosität nach DE-C 27 55 825 aus Naturharz, Formaldehyd und Calciumhydroxid
In einem heizbaren 2l-Mehrhalskolben mit Rührwerk, Thermometer, Tropftrichter, Rückflußkühler und Einfüllrohr werden unter einer Stickstoffatmosphäre 1000 g handelsübliches Kolophonium chinesischer Provenienz geschmolzen. In die 110 °C heiße Schmelze gibt man sodann 100 g Paraformaldehyd. Anschließend wird im verschlossenen Gefäß auf 150 °C erhitzt, so daß sich ein Druck von 2 bar einstellt. Nach zweistündiger Reaktion wird das Gefäß auf Normaldruck entspannt. Das erhaltene Reaktionsgemisch wird auf 250 °C erhitzt. In diese Schmelze wird innerhalb einer Stunde eine Suspension von 68 g Calciumhydroxid in 68 g Xylol unter Abdestillieren von Lösungsmittel und Wasser getropft. Danach werden innerhalb einer halben Stunde 13 g Essigsäure in 5 g Xylol zugetropft. Man läßt noch zwei Stunden nachreagieren, evakuiert zur Entfernung flüchtiger Anteile auf 50 mbar, belüftet mit Stickstoff auf Normaldruck und läßt abkühlen. Das feste Harz schmilzt bei 145 °C und besitzt, 25%ig in Toluol gelöst, eine Viskosität von 2,5 mPa·s.

### Beispiel 1

### Herstellung eines erfindungsgemäßen Festresinats aus Naturharz, Formaldehyd, Nonylphenol und Calciumhydroxid

In einem heizbaren 2l-Mehrhalskolben mit Rührwerk, Thermometer, Tropftrichter, Rückflußkühler und Einfüllrohr werden unter einer Stickstoffatmosphäre 1000 g handelsübliches Kolophonium chinesischer Provenienz geschmolzen. In die 110 °C heiße Schmelze gibt man sodann 100 g Paraformaldehyd. Anschließend wird im geschlossenen Gefäß auf 150 °C erhitzt, so daß sich ein Druck von 2 bar einstellt. Nach zweistündiger Reaktion wird das Gefäß auf Normaldruck entspannt. Zur erhaltenen Reaktionsmischung werden 60 g Nonylphenol zugesetzt und die Schmelze auf 250 °C unter Abdestillieren von Wasser erhitzt. In diese Schmelze wird sodann innerhalb einer Stunde eine Suspension von 68 g Calciumhydroxid in 68 g Xylol unter Abdestillieren von Lösungsmittel und weiterem Wasser getropft. Danach werden innerhalb einer halben Stunde 13 g Essigsäure in 5 g Xylol zugetropft. Man läßt noch zwei Stunden nachreagieren, evakuiert zur Entfernung flüchtiger Anteile auf 50 mbar, belüftet mit Stickstoff auf Normaldruck und läßt abkühlen. Das feste Harz schmilzt bei 140 °C und besitzt, 25%ig in Toluol gelöst, eine Viskosität von 5,5 mPa·s.

### Beispiel 2

### Herstellung eines erfindungsgemäßen Festresinats aus Naturharz, Maleinsäureanhydrid, Formaldehyd, Nonylphenol und Calciumhydroxid

In einem heizbaren 2l-Mehrhalskolben mit Rührwerk, Thermometer, Tropftrichter, Rückflußkühler und Einfüllrohr werden unter einer Stickstoffatmosphäre 1000 g handelsübliches Kolophonium portugiesischer Provenienz und 30 g Maleinsäureanhydrid bei 160 °C geschmolzen. Nach einer Stunde läßt man auf 110 °C abkühlen und versetzt die Schmelze mit 90 g Paraformaldehyd. Anschließend wird im verschlossenen Gefäß auf 150 °C erhitzt, so daß sich ein Druck von 2 bar einstellt. Nach zweistündiger Reaktion wird das Gefäß auf Normaldruck entspannt. Zur Reaktionsmischung werden 60 g Nonylphenol zugesetzt und die Schmelze auf 250 °C unter Abdestillieren von Wasser erhitzt. In diese Schmelze wird sodann innerhalb einer Stunde eine Suspension von 68 g Calciumhydroxid in 68 g Xylol unter Abdestillieren von Lösungsmittel und weiterem Wasser getropft. Danach werden innerhalb einer halben Stunde 13 g Essigsäure in 5 g Xylol zugetropft. Man läßt noch zwei Stunden nachreagieren, evakuiert zur Entfernung flüchtiger Anteile auf 50 mbar, belüftet mit Stickstoff auf Normaldruck und läßt abkühlen. Das feste Harz schmilzt bei 140 °C und besitzt, 25%ig in Toluol gelöst, eine Viskosität von 4,5 mPa·s.

### Beispiel 3

### Herstellung eines erfindungsgemäßen Festresinats aus Tallharz, Maleinsäureanhydrid, Formaldehyd, Nonylphenol und Calciumhydroxid

Man verfährt, wie in Beispiel 2 angegeben, mit der Abänderung, daß Kolophonium durch die gleiche Menge eines Tallharzes der Säurezahl 165 g KOH/g Harz ersetzt wird. Das feste Harz schmilzt bei 138 °C und besitzt, 25%ig in Toluol gelöst, eine Viskosität von 4 mPa·s.

### Beispiel 4

### Herstellung eines erfindungsgemäßen Festresinats aus Tallharz, Maleinsäureanhydrid, Formaldehyd, Glycerin, Nonylphenol und Calciumhydroxid

Man verfährt, wie in Beispiel 2 angegeben, mit der Abänderung, daß Kolophonium durch die gleiche Menge eines Tallharzes der Säurezahl 165 g KOH/g Harz ersetzt und dem Ansatz 10 g Glycerin hinzugefügt wird. Das feste Harz schmilzt bei 145 °C und besitzt, 25%ig in Toluol gelöst, eine Viskosität von 6,5 mPa·s.

### Vergleichsbeispiel 2

### Versuch der Herstellung eines Festresinats mit erhöhter Lösungsviskosität nach DE-C 27 55 825 aus Naturharz und Formaldehyd unter Erhöhung des Calciumhydroxid-Einstands

Man verfährt, wie in Vergleichsbeispiel 1 angegeben, mit der Abänderung, daß der Calciumhydroxid Einstand um 15 Gew.-% von 68 g auf 78,2 g erhöht wird. Das resultierende Produkt enthält auskristallisierte Bestandteile und löst sich in Toluol nicht mehr vollständig auf. Es ist für die Anwendung als Bindemittel in Toluoltiefdruckfarben unbrauchbar.

### Beispiel 5

### Herstellung eines erfindungsgemäßen Festresinats mit erhöhter Lösungsviskosität aus Naturharz, Formaldehyd, Nonylphenol unter Erhöhung des Calciumhydroxid-Einstands

Man verfährt, wie in Beispiel 1 angegeben, mit der Abänderung, daß der Calciumhydroxid Einstand um 15 Gew.-% von 68 g auf 78,2 g erhöht wird. Das resultierende Harz enthält keine auskristallisierten Anteile und löst sich klar in Toluol. Eine 25%ige Lösung besitzt eine Viskosität von 27 mPa·s.

### Vergleichsbeispiel 3

### Herstellung eines Festresinats aus Naturharz, Formaldehyd, Nonylphenol und Calciumhydroxid

In einem heizbaren 2l-Mehrhalskolben mit Rührwerk, Thermometer, Tropftrichter, Rückflußkühler und Einfüllrohr werden unter einer Stickstoffatmosphäre 1000 g handelsübliches Kolophonium geschmolzen. In die 110 °C heiße Schmelze gibt man sodann 100 g Paraformaldehyd, 60 g Nonylphenol und 5 g Calciumhydroxid und erhitzt die Schmelze im geschlossenen Gefäß auf 140 °C, so daß sich ein Druck von 2 bar einstellt. Nach zweistündiger Reaktionszeit wird drucklos gestellt und die Schmelze auf 250 °C unter Abdestillieren von Wasser erhitzt. In diese Schmelze wird sodann innerhalb einer Stunde eine Suspension von 63 g Calciumhydroxid in 68 g Xylol unter Abdestillieren von Lösungsmittel und weiterem Wasser getropft. Danach wurden innerhalb einer halben Stunde 13 g Essigsäure in 5 g Xylol zugetropft. Man läßt noch zwei Stunden nachreagieren, evakuiert zur Entfernung flüchtiger Anteile auf 50 mbar, belüftet mit Stickstoff auf Normaldruck und läßt abkühlen. Das feste Harz schmilzt bei 140 °C. Eine 25%ige Lösung in Toluol besitzt eine gelartige zähe Konsistenz. Die Formulierung einer Toluoltiefdruckfarbe ist nicht möglich.

### Anwendungstechnische Beispiele

### Beispiel 6

Nach üblichen Methoden wird aus
30 g Bindemittelharz des Vergleichsbeispiels 1
8 g Pigment ®Litholrubin (Rotpigment, Hersteller BASF AG)
62 g Toluol
durch Dispergieren die Farbe A für den Toluoltiefdruck hergestellt.

In analoger Weise werden aus
24 g Bindemittelharz der Beispiele 1 und 2
8 g Pigment Litholrubin
68 g Toluol
Toluoltiefdruckfarben formuliert. Mit dem Resinat aus Beispiel 1 wird die harzarme Farbe B und mit dem Resinat aus Beispiel 2 die harzarme Farbe C erhalten.

Die Farben werden mit einer Druckmaschine auf gestrichenem Papier angedruckt. Der Glanz wird mit dem Laborreflektometer nach Lange bei einem Einstrahlwinkel von 60 ° gemessen. Zur Beurteilung des Durchschlageverhaltens werden mit einer Rakel Farbfilme der Schichtdicke 24 µm auf Naturpapier aufgerakelt. Das Durchschlagen der Farben auf die Rückseite des Bedruckstoffs, das für gute Druckeigenschaften möglichst gering sein soll, wird optisch durch Bestimmen der relativen Farbdichte der Rückseite des Bedruckstoffs, verglichen mit der Vorderseite, ermittelt und mit Noten zwischen 0 und 6 bewertet.
0 = keine Farbdichte auf Rückseite
6 = maximale Farbdichte auf Rückseite (identisch mit Vorderseite)

| Farbe | A | B | C |
|---|---|---|---|
| Glanz [%] | 55 | 54 | 57 |
| Durchschlagen | 1 | 1 | 1 |

Die harzarmen Farben B und C, die im Vergleich zur Farbe A einen um 25 Gew.-% reduzierten Harzanteil aufweisen, weisen trotz des verringerten Harzgehalts ein ähnliches drucktechnisches Ergebnis auf wie die Farbe mit dem Vergleichsharz.

Zur Bestimmung der Lagerstabilität werden die Farben sodann 4 Tage in einer Wärmekammer bei 50 °C gelagert, erneut angedruckt und Glanz und Durchschlageverhalten, wie vorstehend beschrieben, bestimmt.

| Farbe | A | B | C |
|---|---|---|---|
| Glanz [%] | 42 | 51 | 52 |
| Durchschlagen | 5 | 1 | 1 |

Nach der Lagerung haben Glanzverlust und Durchschlagen bei der Vergleichsfarbe deutlicher zugenommen als bei den Farben mit den erfindungsgemäßen Harzen.

### Beispiel 7

Nach üblichen Methoden wird aus
27 g Bindemittelharz des Vergleichsbeispiels 1
8 g ®Permanentgelb DHG N 22 (Gelbpigment, Hersteller Hoechst AG)
65 g Toluol
durch Dispergieren die gelbe Farbe D für den Toluoltiefdruck hergestellt.

In analoger Weise werden aus
22 g Bindemittelharz der Beispiele 1 und 2
8 g ®Permanentgelb DHG N 22
70 g Toluol
gelbe Toluoltiefdruckfarben formuliert. Mit dem Resinat aus Beispiel 1 wird die harzarme Farbe E und mit dem Resinat aus Beispiel 2 die harzarme Farbe F erhalten. Die Farben werden wie vorstehend beschrieben angedruckt und ausgewertet.

| Farbe | D | E | F |
|---|---|---|---|
| Glanz [%] | 65 | 65 | 62 |
| Durchschlagen | 1 | 1 | 1 |

Die harzarmen Farben E und F, die im Vergleich zur Farbe D einen um ca. 18 Gew.-% reduzierten Harzanteil aufweisen, weisen trotz des verringerten Harzgehalts ein ähnliches drucktechnisches Ergebnis auf wie die Farbe mit dem Vergleichsharz.

Zur Bestimmung der Lagerstabilität werden die Farben sodann 4 Tage in einer Wärmekammer bei 50 °C gelagert, erneut angedruckt und Glanz und Durchschlageverhalten wie vorstehend beschrieben bestimmt.

| Farbe | D | E | F |
|---|---|---|---|
| Glanz [%] | 59 | 60 | 58 |
| Durchschlagen | 1 | 1 | 1 |

Auch nach der Lagerung zeigen die mit den erfindungsgemäßen Harzen formulierten Farben trotz des niedrigeren Harzgehalts ein ähnlich gutes drucktechnisches Verhalten wie die mit dem Harz des Standes der Technik formulierte Farbe.

### Beispiel 8

Aus
18 g Bindemittelharz des Beispiels 4
8 g Permanentgelb DHG N 22
74 g Toluol
wird eine harzarme gelbe Toluoltiefdruckfarbe formuliert, die sich ausgezeichnet verdrucken läßt und Drucke mit gutem Glanz liefert.

## Patentansprüche

1. Modifizierte Resinate, herstellbar durch Umsetzung von
A) Naturharzen oder Naturharzsäuren mit
B) Aldehydkomponenten und gegebenenfalls
C) α,β-olefinisch ungesättigten Carbonsäuren oder deren Anhydriden,
anschließende Reaktion der gebildeten Anlagerungsprodukte mit
D) Phenolen und gegebenenfalls
E) Alkoholen mit mindestens zwei Hydroxylgruppen
und anschließende Resinatbildung mit
F) basischen Verbindungen zweiwertiger Metalle.

2. Modifizierte Resinate nach Anspruch 1, dadurch gekennzeichnet, daß unter basischen Verbindungen zweiwertiger Metalle F) Magnesium-, Calcium- oder Zinkverbindungen verstanden werden.

3. Modifizierte Resinate nach Anspruch 1, dadurch gekennzeichnet, daß unter Verbindung A) Naturharze, unter Verbindung B) Formaldehyd, unter Verbindung D) Nonylphenol und unter Verbindung F) Calciumverbindungen verstanden werden.

4. Modifizierte Resinate nach Anspruch 1, dadurch gekennzeichnet, daß unter Verbindung F) Calciumhydroxid oder Calciumoxid verstanden wird.

5. Modifizierte Resinate nach Anspruch 1, dadurch gekennzeichnet, daß die Viskosität von 25 Gew.-%igen Lösungen der Resinate in Toluol 4 bis 50 mPa·s beträgt.

6. Verfahren zur Herstellung von modifizierten Resinaten nach Anspruch 1 durch Umsetzung von
50 bis 95 Gew.-% Naturharzen oder Naturharzsäuren A) mit
1 bis 20 Gew.-% Aldehydkomponenten B) und
0 bis 5 Gew.-% α,β-olefinisch ungesättigten Carbonsäuren oder deren Anhydriden C)
bei erhöhter Temperatur von 80 bis 200 °C und bei einem Druck von 1 bis 10 bar, anschließende Reaktion der gebildeten Anlagerungsprodukte mit
1 bis 30 Gew.-% Phenolen D) und
0 bis 10 Gew.-% Alkoholen mit mindestens zwei Hydroxylgruppen E)
im Temperaturbereich von 200 bis 300 °C und anschließende Resinatbildung mit
0,1 bis 15 Gew.-% basischen Verbindungen zweiwertiger Metalle F)
bei einer Temperatur zwischen 160 und 300°C.

7. Verwendung der modifizierten Resinate nach Anspruch 1 in Druckfarben.

8. Verwendung der modifizierten Resinate nach Anspruch 1 als Bindemittelharze für den Illustrationstiefdruck.
